# EUROPEAN PATENT SPECIFICATION

(11) **EP 3 430 841 B1**
(45) Date of publication and mention of the grant of the patent: **18.05.2022**
(21) Application number: 17714109.0
(22) Date of filing: 16.03.2017
(51) Int. Cl.: H04W 48/20, H04W 88/04, H04W 4/70, H04W 48/16

(54) **ASSISTED CELL ACQUISITION FOR LOW COST WIRELESS DEVICES**
UNTERSTÜTZTE ZELLERFASSUNG FÜR DRAHTLOSE VORRICHTUNGEN MIT NIEDRIGEN KOSTEN
ACQUISITION ASSISTÉE DE CELLULE POUR DISPOSITIFS SANS FIL À BAS COÛT

(30) Priority: 16.03.2016 US 201662309440 P; 15.03.2017 US 201715459107
(43) Date of publication of application: 23.01.2019
(73) Proprietor: Qualcomm Incorporated, San Diego, CA 92121-1714 (US)
(72) Inventor: RICO ALVARINO, Alberto, San Diego, CA 92121-1714 (US); SAMBHWANI, Sharad Deepak, San Diego, CA 92121-1714 (US); XU, Hao, San Diego, CA 92121-1714 (US)
(74) Representative: Dunlop, Hugh Christopher
(86) International application number: PCT/US2017/022628
(87) International publication number: WO 2017/161070

(56) References cited:
- WO-A1-2011/123755
- KR-B1- 101 206 652
- US-A1- 2014 171 062
- US-A1- 2014 219 162
- US-A1- 2016 007 271
- QUALCOMM INCORPORATED: "New WI Proposal: D2D based MTC", 3GPP DRAFT; RP-151948 ED2D BASED MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Sitges, Spain; 20151207 - 20151210 7 December 2015 (2015-12-07), XP051052845, Retrieved from the Internet: URL:http://www.3gpp.org/ftp/Meetings_3GPP_ SYNC/RAN/Docs/ [retrieved on 2015-12-07]

## Description

### BACKGROUND

### Field of the Disclosure

Certain aspects of the present disclosure generally relate to wireless communications and, more particularly, to assisted cell acquisition for low cost wireless devices, such as wearables.

### Description of Related Art

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, 3rd Generation Partnership Project (3GPP) Long Term Evolution (LTE)/LTE-Advanced systems and orthogonal frequency division multiple access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-input single-output, multiple-input single-output or a multiple-input multiple-output (MIMO) system.

A wireless communication network may include a number of base stations that can support communication for a number of wireless devices. Wireless devices may include user equipments (UEs). Machine type communications (MTC) may refer to communication involving at least one remote device on at least one end of the communication and may include forms of data communication which involve one or more entities that do not necessarily need human interaction. MTC UEs may include UEs that are capable of MTC communications with MTC servers and/or other MTC devices through Public Land Mobile Networks (PLMN), for example. Wireless devices may include narrowband Internet-of-Things (NB-IoT) devices. IoT may refer to a network of physical objects, devices, or "things". IoT devices may be embedded with, for example, electronics, software, or sensors and may have network connectivity, which enable these devices to collect and exchange data.

Some next generation, NR, or 5G networks may include a number of base stations, each simultaneously supporting communication for multiple communication devices, such as UEs. In LTE or LTE-A network, a set of one or more base stations may define an e NodeB (eNB). In other examples (e.g., in a next generation or 5G network), a wireless multiple access communication system may include a number of distributed units (e.g., edge units (EUs), edge nodes (ENs), radio heads (RHs), smart radio heads (SRHs), transmission reception points (TRPs), etc.) in communication with a number of central units (e.g., central nodes (CNs), access node controllers (ANCs), etc.), where a set of one or more distributed units, in communication with a central unit, may define an access node (e.g., a new radio base station (NR BS), a new radio node-B (NR NB), a network node, gNB, etc.). A base station or DU may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. An example of an emerging telecommunication standard is new radio (NR), for example, 5G radio access. NR is a set of enhancements to the LTE mobile standard promulgated by 3GPP. It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL) as well as support beamforming, MIMO antenna technology, and carrier aggregation.

WO2011/123755 describes group procedures for machine type communications device.

US2016/007271 describes methods and devices for providing system information of a cellular communication network.

### SUMMARY

The invention is defined in the appended claims. The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "DETAILED DESCRIPTION" one will understand how the features of this disclosure provide advantages that include improved communications between access points and stations in a wireless network.

Certain aspects of the present disclosure generally relate to assisted cell acquisition for low cost wireless devices such as wearables.

Certain aspects of the present disclosure provide a method, performed by a wireless node which may be a low cost wireless device, such as an enhanced machine type communications (eMTC) device (e.g., a wearable). The method generally includes receiving assistance information from another wireless node for use in performing a cell search and performing a cell search using the assistance information.

Certain aspects of the present disclosure provide a method, performed by a wireless node (e.g., a smartphone or low cost device). The method generally includes obtaining assistance information for use in performing a cell search and transmitting the assistance information to another wireless node.

Certain aspects of the present disclosure provide an apparatus, such as a wireless node which may be low cost wireless device, for example an eMTC device (e.g., a wearable). The apparatus generally includes means for receiving assistance information from another wireless node for use in performing a cell search and means for performing a cell search using the assistance information.

Certain aspects of the present disclosure provide an apparatus, such as a wireless node (e.g., a smartphone or low cost device). The apparatus generally includes means for obtaining assistance information for use in performing a cell search and means for transmitting the assistance information to another wireless node.

Certain aspects of the present disclosure provide an apparatus, such as a wireless node which may be low cost wireless device, for example an eMTC device (e.g., a wearable). The apparatus generally includes at least one processor configured to receive assistance information from another wireless node for use in performing a cell search and perform a cell search using the assistance information; and a memory coupled with the at least one processor.

Certain aspects of the present disclosure provide an apparatus, such as a wireless node (e.g., a smartphone or low cost device). The apparatus generally includes at least one processor configured to obtain assistance information for use in performing a cell search and transmit the assistance information to another wireless node; and a memory coupled with the at least one processor.

Certain aspects of the present disclosure provide a computer readable medium having computer executable code stored thereon for wireless communications by a wireless node which may be a low cost wireless device, such as an eMTC device (e.g., a wearable). The computer executable code generally includes code for receiving assistance information from another wireless node for use in performing a cell search and code for performing a cell search using the assistance information.

Certain aspects of the present disclosure provide a computer readable medium having computer executable code stored thereon for wireless communications by a wireless node (e.g., a smartphone or low cost device). The computer executable code generally includes code for obtaining assistance information for use in performing a cell search and code for transmitting the assistance information to another wireless node.

Numerous other aspects are provided including methods, apparatus, systems, computer program products, computer-readable medium, and processing systems. To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a block diagram conceptually illustrating an example of a wireless communication network, in accordance with certain aspects of the present disclosure.
FIG. 2 shows a block diagram conceptually illustrating an example of a base station in communication with a user equipment (UE) in a wireless communications network, in accordance with certain aspects of the present disclosure.
FIG. 3 is a block diagram conceptually illustrating an example of a frame structure in a wireless communications network, in accordance with certain aspects of the present disclosure.
FIG. 4 is a block diagram conceptually illustrating two exemplary subframe formats with the normal cyclic prefix, in accordance with certain aspects of the present disclosure.
FIG. 5 illustrates an exemplary subframe configuration for enhanced machine type communications (eMTC), in accordance with certain aspects of the present disclosure.
FIG. 6 illustrates an example deployment of narrowband Internet-of-Things (NB-IoT), in accordance with certain aspects of the present disclosure.
FIG. 7 illustrates an example logical architecture of a distributed radio access network (RAN), in accordance with certain aspects of the present disclosure.
FIG. 8 illustrates an example physical architecture of a distributed RAN, in accordance with certain aspects of the present disclosure.
FIG. 9 is a diagram illustrating an example of a downlink (DL)-centric subframe, in accordance with certain aspects of the present disclosure.
FIG. 10 is a diagram illustrating an example of an uplink (UL)-centric subframe, in accordance with certain aspects of the present disclosure.
FIG. 11 is a flow diagram illustrating example operations by a wireless node for assisted cell acquisition, in accordance with certain aspects of the present disclosure.
FIG. 12 is a flow diagram illustrating example operations by another wireless node for assisted cell acquisition, in accordance with certain aspects of the present disclosure.
FIG. 13 is a call flow diagram illustrating example signaling between wireless nodes of cell-acquisition assistance information, in accordance with certain aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

In certain system, such as enhanced machine type communication (eMTC) system, devices may be low cost. Cell search may be costly, for example, the signal-to-noise ratio (SNR) may be low, there may be a large number of frequency carrier (or frequency raster) hypotheses, and since low cost devices may support only a single receive chain (e.g., 1 RX devices) and reduced bandwidth, there may be reduced processing gain. Thus, the cell search may result battery drain of the low cost device.

Aspects of the present disclosure provide techniques for assisted cell acquisition for low cost wireless devices such as wearables (e.g., an enhanced machine type communications (eMTC) device), which may increase the efficiency of performing cell search for these devices. According to certain aspects, a wireless node such as wearable device (e.g., a smartwatch) can receive cell-search assistance information from another wireless device (e.g., such as a smartphone). The cell-search assistance information may be received from a device with higher processing power and/or more antennas. The wearable device can perform a cell search using the assistance information. The assistance information may include information regarding neighboring cell that may enable the wearable device to acquire the neighboring cells sooner or more efficiently. This may result in a faster acquisition time, more power savings, and an enhanced battery life for the wearable device.

The techniques described herein may be used for various wireless communication networks such as CDMA, TDMA, FDMA, OFDMA, SC-FDMA and other networks. The terms "network" and "system" are often used interchangeably. A CDMA network may implement a radio technology such as universal terrestrial radio access (UTRA), cdma2000, etc. UTRA includes wideband CDMA (WCDMA), time division synchronous CDMA (TD-SCDMA), and other variants of CDMA. cdma2000 covers IS-2000, IS-95 and IS-856 standards. A TDMA network may implement a radio technology such as global system for mobile communications (GSM). An OFDMA network may implement a radio technology such as evolved UTRA (E-UTRA), ultra mobile broadband (UMB), IEEE 802.11 (Wi-Fi), IEEE 802.16 (WiMAX), IEEE 802.20, Flash-OFDM^{®}, etc. UTRA and E-UTRA are part of universal mobile telecommunication system (UMTS). 3GPP Long Term Evolution (LTE) and LTE-Advanced (LTE-A), in both frequency division duplex (FDD) and time division duplex (TDD), are new releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, certain aspects of the techniques are described below for LTE/LTE-Advanced, and LTE/LTE-Advanced terminology is used in much of the description below. LTE and LTE-A are referred to generally as LTE. While aspects may be described herein using terminology commonly associated with 3G and/or 4G wireless technologies, aspects of the present disclosure can be applied in other generation-based communication systems, such as 5G and later, including NR technologies.

### EXAMPLE WIRELESS COMMUNICATIONS NETWORK

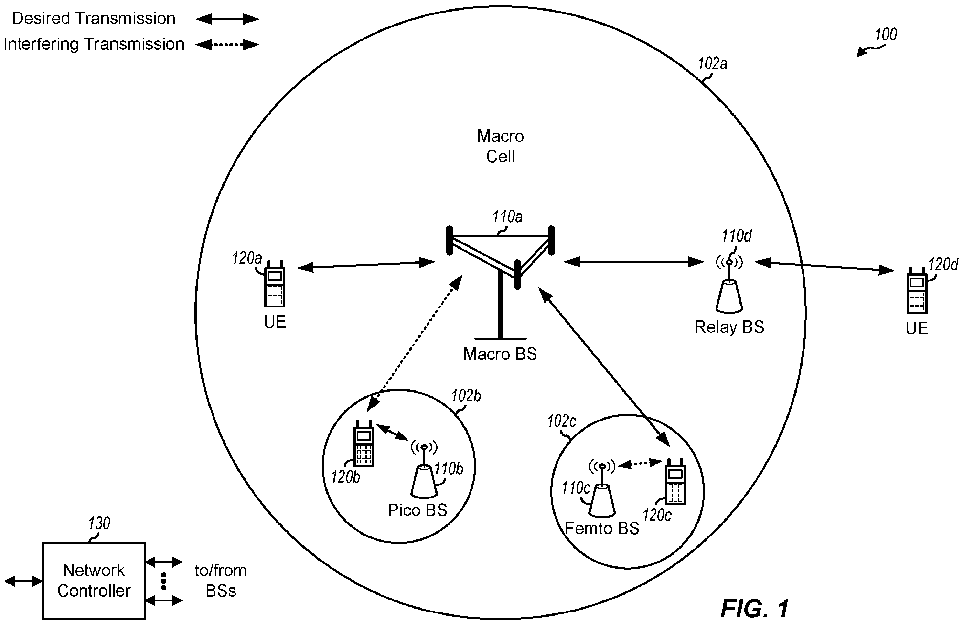

FIG. 1 illustrates an example wireless communication network 100, in which aspects of the present disclosure may be practiced. For example, techniques presented herein may be used for assisted cell acquisition for low cost wireless devices such as wearables (e.g., a wearable enhanced machine type communications (eMTC) device). In aspects, the network 100 may include low cost devices such as wearables. For example, one or more of the UEs 120 may be a low cost UE, such as a wearable. The low cost UE 120 may receive cell-search acquisition from another wireless device such as a smartphone or another low cost device which may be another of the UEs 120. The cell-search assistance information can include information about neighboring cells, such as one of the BSs 110.

Wireless communication network 100 may be an LTE network or some other wireless network. Wireless communication network 100 may include a number of BSs 110 and other network entities. A BS is an entity that communicates with user equipments (UEs) and may also be referred to as a, a Node B, eNB, an access point, 5G NB, NR BS, transmission reception point (TRP), gNB, etc. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in FIG. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station" and "cell" may be used interchangeably herein.

Wireless communication network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in FIG. 1, a relay station 110d may communicate with macro BS 110a and a UE 120d in order to facilitate communication between BS 110a and UE 120d. A relay station may also be referred to as a relay eNB, a relay base station, a relay, etc.

Wireless communication network 100 may be a heterogeneous network that includes BSs of different types, e.g., macro BSs, pico BSs, femto BSs, relay BSs, etc. These different types of eNBs may have different transmit power levels, different coverage areas, and different impact on interference in wireless network 100. For example, macro BSs may have a high transmit power level (e.g., 5 to 40 Watts) whereas pico BSs, femto BSs, and relay BSs may have lower transmit power levels (e.g., 0.1 to 2 Watts).

Network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless communication network 100, and each UE may be stationary or mobile. A UE may also be referred to as an access terminal, a terminal, a mobile station, a subscriber unit, a station, etc. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, wearables (e.g., smart watch, smart bracelet, smart glasses, smart ring, smart clothing), etc.

Some UEs may be considered machine-type communication (MTC) UEs. MTC may refer to communication involving at least one remote device on at least one end of the communication and may include forms of data communication which involve one or more entities that do not necessarily need human interaction. MTC UEs can include remote devices, such as drones, robots, sensors, meters, location tags, etc., that may communicate with a base station, another remote device, or some other entity. MTC UEs may include UEs that are capable of MTC communications with MTC servers and/or other MTC devices through Public Land Mobile Networks (PLMN), for example. Devices may include internet-of-things (IoT) things devices.

In FIG. 1, a solid line with double arrows indicates desired transmissions between a UE and a serving BS, which is a BS designated to serve the UE on the downlink and/or uplink. A dashed line with double arrows indicates potentially interfering transmissions between a UE and a BS.

One or more UEs 120 in wireless communication network 100 (e.g., an LTE network) may also be a narrowband bandwidth UE. Narrowband UEs may be limited to a particular narrowband assignment of 1.4 MHz or six resource blocks (RBs) partitioned out of the available system bandwidth) while co-existing within a wider system bandwidth (e.g., at 1.4/3/5/10/15/20 MHz). Additionally, narrowband UEs may also be able to support one or more coverage modes of operation. For example, the narrowband UE may be able to support coverage enhancements up to 15 dB.

These UEs may co-exist with legacy and/or advanced UEs (e.g., capable of operating on a wider bandwidth) in the wireless communication network 100 and may have one or more capabilities that are limited when compared to the other UEs in the wireless network. For example, in LTE Rel-12, when compared to legacy and/or advanced UEs in the LTE network, the narrowband UEs may operate with one or more of the following: a reduction in maximum bandwidth (relative to legacy UEs), a single receive radio frequency (RF) chain, reduction of peak rate (e.g., a maximum of 1000 bits for a transport block size (TBS) may be supported), reduction of transmit power, rank 1 transmission, half duplex operation, etc. In some cases, if half duplex operation is supported, the narrowband UEs may have a relaxed switching timing from transmit to receive (or from receive to transmit) operations. For example, in one case, compared to a switching timing of 20 microseconds (us) for legacy and/or advanced UEs, the narrowband UEs may have a relaxed switching timing of 1 millisecond (ms).

In some cases, the narrowband UEs (e.g., in LTE Rel-12) may also be able to monitor downlink (DL) control channels in the same away as legacy and/or advanced UEs in the LTE network monitor DL control channels. Release 12 narrowband UEs may still monitor downlink (DL) control channels in the same way as regular UEs, for example, monitoring for wideband control channels in the first few symbols (e.g., physical downlink control channel (PDCCH)) as well as narrowband control channels occupying a relatively narrowband, but spanning a length of a subframe (e.g., enhanced PDCCH (ePDCCH)).

In some cases, a UE (e.g., a narrowband UE or a wideband UE) may perform a cell search and acquisition procedure before communicating in the network. In one case, with reference to the wireless communication network 100 illustrated in FIG. 1 as an example, the cell search and acquisition procedure may be performed when the UE is not connected to a cell and wants to access the network. In these cases, the UE may have just powered on, restored a connection after temporarily losing connection to the cell, etc. In other cases, the cell search and acquisition procedure may be performed when the UE is already connected to a cell. For example, the UE may have detected a new cell and may prepare a handover to the new cell. As another example, the UE may be operating in one or more low power states (e.g., may support discontinuous reception (DRX)) and, upon exiting the one or more low power states, may have to perform the cell search and acquisition procedure (even though the UE is still in connected mode).

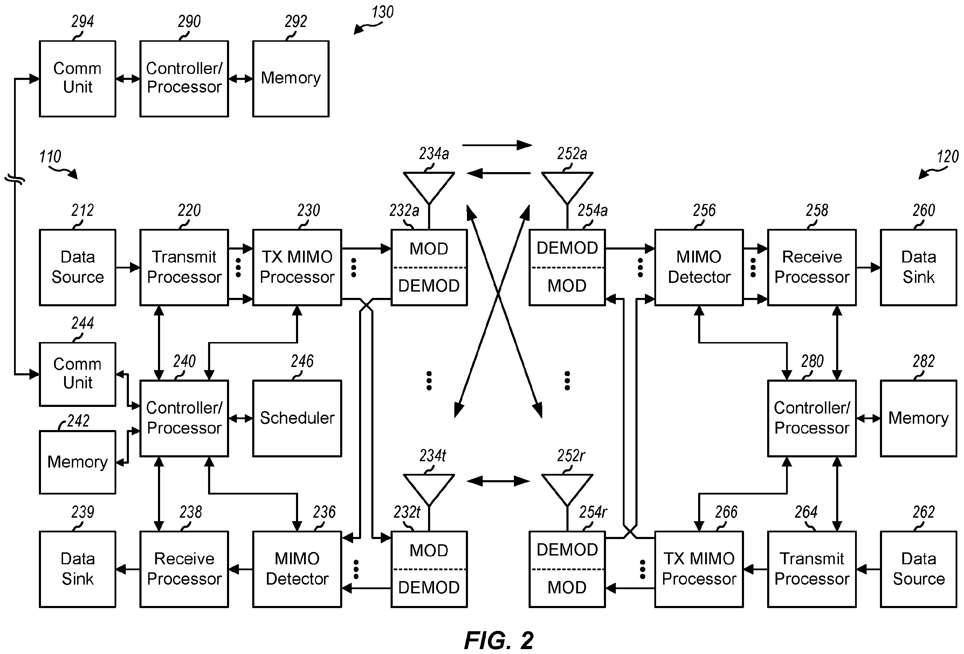

FIG. 2 shows a block diagram of a design of BS 110 and UE 120, which may be one of the BSs and one of the UEs in FIG. 1. BS 110 may be equipped with T antennas 234a through 234t, and UE 120 may be equipped with R antennas 252a through 252r, where in general T ≥ 1 and R ≥ 1.

At BS 110, a transmit processor 220 may receive data from a data source 212 for one or more UEs, select one or more modulation and coding schemes (MCS) for each UE based on CQIs received from the UE, process (e.g., encode and modulate) the data for each UE based on the MCS(s) selected for the UE, and provide data symbols for all UEs. Transmit processor 220 may also process system information (e.g., for SRPI, etc.) and control information (e.g., CQI requests, grants, upper layer signaling, etc.) and provide overhead symbols and control symbols. Processor 220 may also generate reference symbols for reference signals (e.g., the CRS) and synchronization signals (e.g., the PSS and SSS). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM, etc.) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) its received signal to obtain input samples. Each demodulator 254 may further process the input samples (e.g., for OFDM, etc.) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. A channel processor may determine RSRP, RSSI, RSRQ, CQI, etc.

On the uplink, at UE 120, a transmit processor 264 may receive and process data from a data source 262 and control information (e.g., for reports comprising RSRP, RSSI, RSRQ, CQI, etc.) from controller/processor 280. Processor 264 may also generate reference symbols for one or more reference signals. The symbols from transmit processor 264 may be precoded by a TX MIMO processor 266 if applicable, further processed by modulators 254a through 254r (e.g., for SC-FDM, OFDM, etc.), and transmitted to base station 110. At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Processor 238 may provide the decoded data to a data sink 239 and the decoded control information to controller/processor 240. Base station 110 may include communication unit 244 and communicate to network controller 130 via communication unit 244. Network controller 130 may include communication unit 294, controller/processor 290, and memory 292.

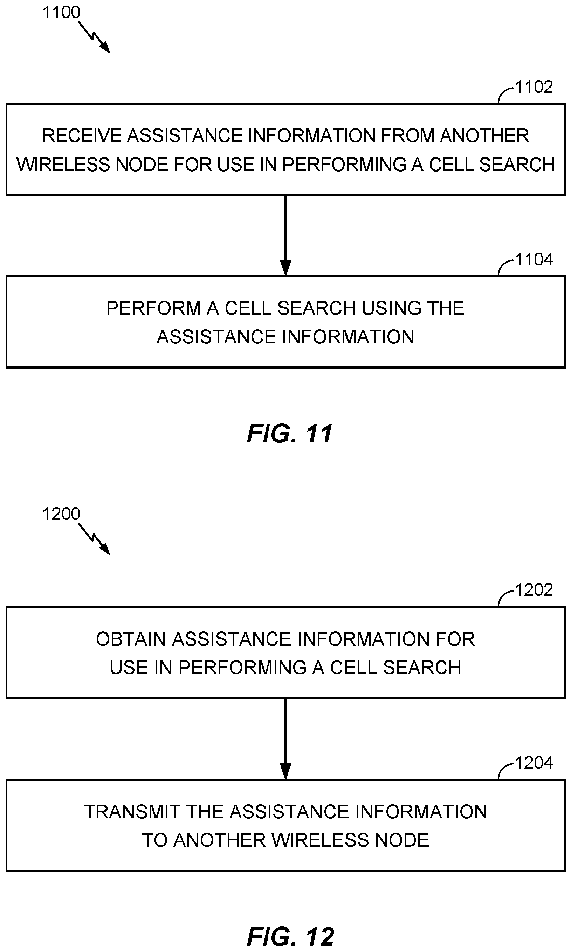

Controllers/processors 240 and 280 may direct the operation at base station 110 and UE 120, respectively, to perform techniques presented herein for power savings for control channel monitoring in enhanced machine type communications (eMTC). For example, processor 240 and/or other processors and modules at base station 110, and processor 280 and/or other processors and modules at UE 120, may perform or direct operations of base station 110 and UE 120, respectively. For example, controller/processor 280 and/or other controllers/processors and modules at UE 120, and/or controller/processor 240 and/or other controllers/processors and modules at BS 110 may perform or direct operations 1100 and 1200 shown in FIGs. 11 and 12, respectively. Memories 242 and 282 may store data and program codes for base station 110 and UE 120, respectively. A scheduler 246 may schedule UEs for data transmission on the downlink and/or uplink.

In some examples, access to the air interface may be scheduled, wherein a scheduling entity (e.g., a base station) allocates resources for communication among some or all devices and equipment within its service area or cell. Within the present disclosure, as discussed further below, the scheduling entity may be responsible for scheduling, assigning, reconfiguring, and releasing resources for one or more subordinate entities. That is, for scheduled communication, subordinate entities utilize resources allocated by the scheduling entity.

Base stations are not the only entities that may function as a scheduling entity. That is, in some examples, a UE may function as a scheduling entity, scheduling resources for one or more subordinate entities (e.g., one or more other UEs). In this example, the UE is functioning as a scheduling entity, and other UEs utilize resources scheduled by the UE for wireless communication. A UE may function as a scheduling entity in a peer-to-peer (P2P) network, and/or in a mesh network. In a mesh network example, UEs may optionally communicate directly with one another in addition to communicating with the scheduling entity.

Thus, in a wireless communication network with a scheduled access to time-frequency resources and having a cellular configuration, a P2P configuration, and a mesh configuration, a scheduling entity and one or more subordinate entities may communicate utilizing the scheduled resources.

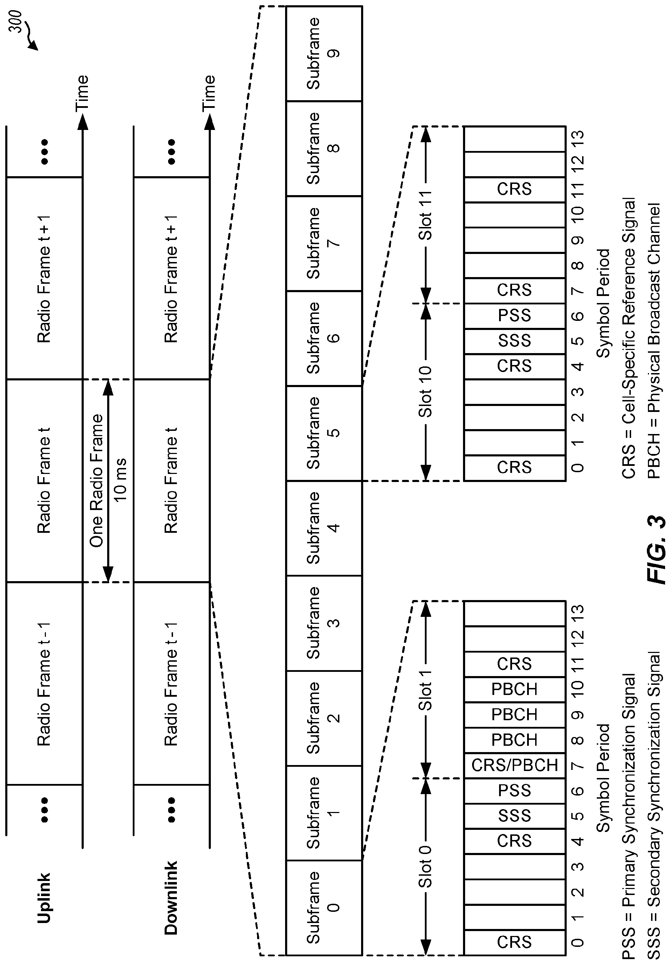

FIG. 3 shows an exemplary frame structure 300 for FDD in a wireless communication system (e.g., LTE). The transmission timeline for each of the downlink and uplink may be partitioned into units of radio frames. Each radio frame may have a predetermined duration (e.g., 10 milliseconds (ms)) and may be partitioned into 10 subframes with indices of 0 through 9. Each subframe may include two slots. Each radio frame may thus include 20 slots with indices of 0 through 19. Each slot may include L symbol periods, e.g., seven symbol periods for a normal cyclic prefix (as shown in FIG. 3) or six symbol periods for an extended cyclic prefix. The 2L symbol periods in each subframe may be assigned indices of 0 through 2L-1.

In certain wireless communication systems (e.g., LTE), a BS may transmit a primary synchronization signal (PSS) and a secondary synchronization signal (SSS) on the downlink in the center of the system bandwidth for each cell supported by the eNB. The PSS and SSS may be transmitted in symbol periods 6 and 5, respectively, in subframes 0 and 5 of each radio frame with the normal cyclic prefix, as shown in FIG. 3. The PSS and SSS may be used by UEs for cell search and acquisition. The BS may transmit a cell-specific reference signal (CRS) across the system bandwidth for each cell supported by the BS. The CRS may be transmitted in certain symbol periods of each subframe and may be used by the UEs to perform channel estimation, channel quality measurement, and/or other functions. The BS may also transmit a physical broadcast channel (PBCH) in symbol periods 0 to 3 in slot 1 of certain radio frames. The PBCH may carry some system information. The BS may transmit other system information such as system information blocks (SIBs) on a physical downlink shared channel (PDSCH) in certain subframes. The BS may transmit control information/data on a physical downlink control channel (PDCCH) in the first B symbol periods of a subframe, where B may be configurable for each subframe. The BS may transmit traffic data and/or other data on the PDSCH in the remaining symbol periods of each subframe.

In certain systems (e.g., such as NR or 5G systems), a BS may transmit these or other signals in these locations or in different locations of the subframe.

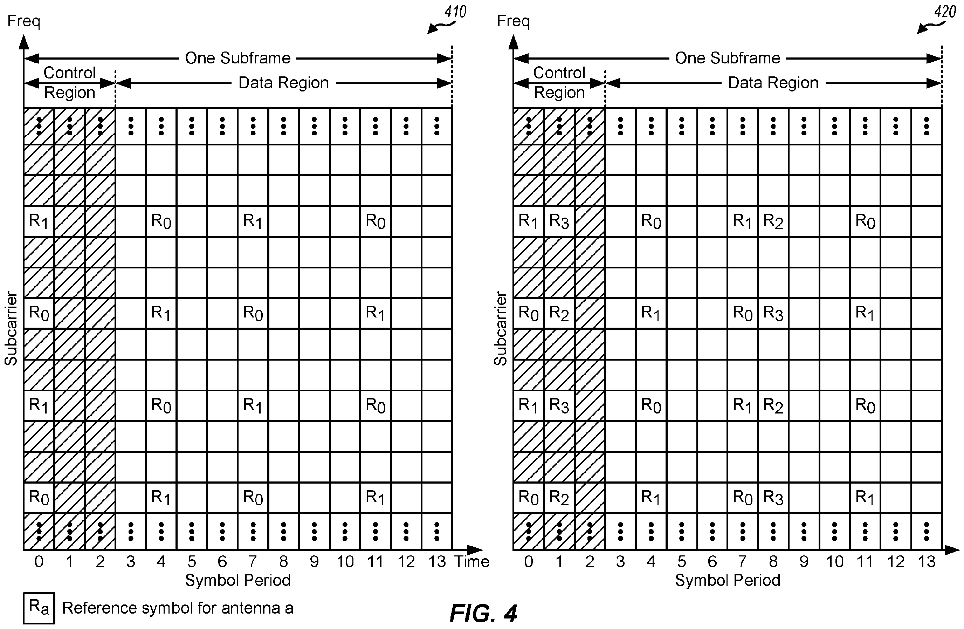

FIG. 4 shows two exemplary subframe formats 410 and 420 with the normal cyclic prefix. The available time frequency resources may be partitioned into resource blocks. Each resource block may cover 12 subcarriers in one slot and may include a number of resource elements. Each resource element may cover one subcarrier in one symbol period and may be used to send one modulation symbol, which may be a real or complex value.

Subframe format 410 may be used for two antennas. A CRS may be transmitted from antennas 0 and 1 in symbol periods 0, 4, 7 and 11. A reference signal is a signal that is known a priori by a transmitter and a receiver and may also be referred to as pilot. A CRS is a reference signal that is specific for a cell, e.g., generated based on a cell identity (ID). In FIG. 4, for a given resource element with label Ra, a modulation symbol may be transmitted on that resource element from antenna a, and no modulation symbols may be transmitted on that resource element from other antennas. Subframe format 420 may be used with four antennas. A CRS may be transmitted from antennas 0 and 1 in symbol periods 0, 4, 7 and 11 and from antennas 2 and 3 in symbol periods 1 and 8. For both subframe formats 410 and 420, a CRS may be transmitted on evenly spaced subcarriers, which may be determined based on cell ID. CRSs may be transmitted on the same or different subcarriers, depending on their cell IDs. For both subframe formats 410 and 420, resource elements not used for the CRS may be used to transmit data (e.g., traffic data, control data, and/or other data).

The PSS, SSS, CRS and PBCH in LTE are described in 3GPP TS 36.211, entitled "Evolved Universal Terrestrial Radio Access (E-UTRA); Physical Channels and Modulation," which is publicly available.

An interlace structure may be used for each of the downlink and uplink for FDD in LTE. For example, Q interlaces with indices of 0 through Q - 1 may be defined, where Q may be equal to 4, 6, 8, 10, or some other value. Each interlace may include subframes that are spaced apart by Q frames. In particular, interlace q may include subframes q, q + Q, q + 2Q, etc., where q ∈ {0,...,Q-1}.

The wireless network may support hybrid automatic retransmission request (HARQ) for data transmission on the downlink and uplink. For HARQ, a transmitter (e.g., an eNB) may send one or more transmissions of a packet until the packet is decoded correctly by a receiver (e.g., a UE) or some other termination condition is encountered. For synchronous HARQ, all transmissions of the packet may be sent in subframes of a single interlace. For asynchronous HARQ, each transmission of the packet may be sent in any subframe.

A UE may be located within the coverage of multiple BSs. One of these BSs may be selected to serve the UE. The serving eNB may be selected based on various criteria such as received signal strength, received signal quality, pathloss, etc. Received signal quality may be quantified by a signal-to-noise-and-interference ratio (SINR), or a reference signal received quality (RSRQ), or some other metric. The UE may operate in a dominant interference scenario in which the UE may observe high interference from one or more interfering BSs.

### Example Narrowband eMTC

The focus of traditional LTE design (e.g., for legacy "non MTC" devices) is on the improvement of spectral efficiency, ubiquitous coverage, and enhanced quality of service (QoS) support. Current LTE system downlink (DL) and uplink (UL) link budgets are designed for coverage of high end devices, such as state-of-the-art smartphones and tablets, which may support a relatively large DL and UL link budget.

However, as described above, one or more UEs in the wireless communication network (e.g., wireless communication network 100) may be devices that have limited communication resources, such as narrowband UEs, as compared to other (wideband) devices in the wireless communication network. For narrowband UEs, various requirements may be relaxed as only a limited amount of information may need to be exchanged. For example, maximum bandwidth may be reduced (relative to wideband UEs), a single receive radio frequency (RF) chain may be used, peak rate may be reduced (e.g., a maximum of 100 bits for a transport block size), transmit power may be reduced, Rank 1 transmission may be used, and half duplex operation may be performed.

In some cases, if half-duplex operation is performed, MTC UEs may have a relaxed switching time to transition from transmitting to receiving (or receiving to transmitting). For example, the switching time may be relaxed from 20µs for regular UEs to 1ms for MTC UEs. Release 12 MTC UEs may still monitor downlink (DL) control channels in the same way as regular UEs, for example, monitoring for wideband control channels in the first few symbols (e.g., PDCCH) as well as narrowband control channels occupying a relatively narrowband, but spanning a length of a subframe (e.g., enhanced PDCCH or ePDCCH).

Certain standards (e.g., LTE Release 13) may introduce support for various additional MTC enhancements, referred to herein as enhanced MTC (or eMTC). For example, eMTC may provide MTC UEs with coverage enhancements up to 15dB.

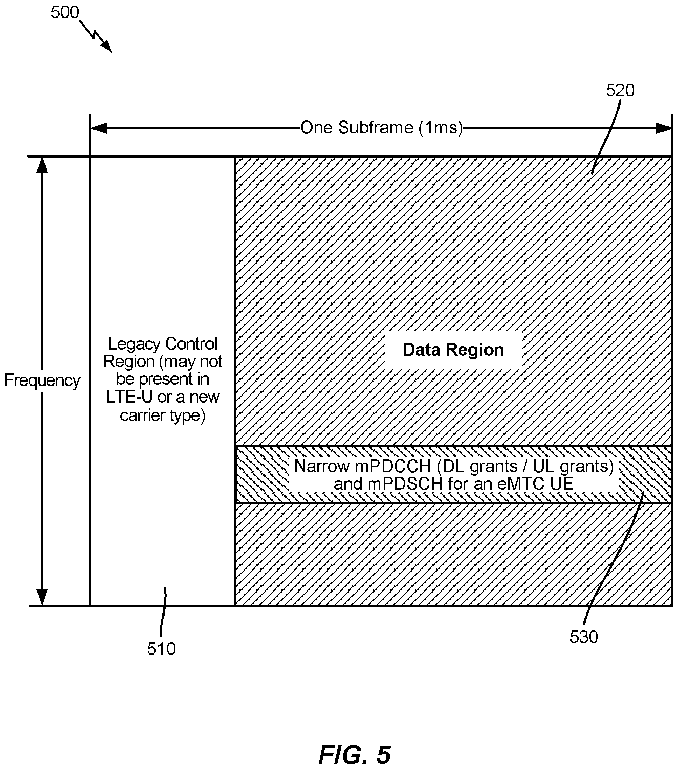

As illustrated in the subframe structure 500 of FIG. 5, eMTC UEs can support narrowband operation while operating in a wider system bandwidth (e.g., 1.4/3/5/10/15/20MHz). In the example illustrated in FIG. 5, a conventional legacy control region 510 may span system bandwidth of a first few symbols, while a narrowband region 530 of the system bandwidth (spanning a narrow portion of a data region 520) may be reserved for an MTC physical downlink control channel (referred to herein as an M-PDCCH) and for an MTC physical downlink shared channel (referred to herein as an M-PDSCH). In some cases, an MTC UE monitoring the narrowband region may operate at 1.4MHz or 6 resource blocks (RBs).

However, as noted above, eMTC UEs may be able to operate in a cell with a bandwidth larger than 6 RBs. Within this larger bandwidth, each eMTC UE may still operate (e.g., monitor/receive/transmit) while abiding by a 6-physical resource block (PRB) constraint. In some cases, different eMTC UEs may be served by different narrowband regions (e.g., with each spanning 6-PRB blocks). As the system bandwidth may span from 1.4 to 20 MHz, or from 6 to 100 RBs, multiple narrowband regions may exist within the larger bandwidth. An eMTC UE may also switch or hop between multiple narrowband regions in order to reduce interference.

The wireless communication network may support a 180 kHz deployment for narrowband operation (or narrowband internet of things (NB-IoT)) with different deployment modes. In one example, narrowband operations may be deployed in-band, for example, using resource blocks within a wider system bandwidth. In one case, narrowband operations may use one resource block within the wider system bandwidth of an LTE network. In this case, the 180 kHz bandwidth for the resource block may have to be aligned with a wideband LTE resource block. In one example, narrowband operations may be deployed in the unused resource blocks within a LTE carrier guard-band. In this deployment, the 180 kHz RB within the guard band may have to be aligned with a 15 kHz tone grid of wideband LTE, for example, in order to use the same FFT and/or reduce interference in-band legacy LTE communications.

### Example Narrowband Internet-of-Things (NB-IoT)

The Internet-of-Things (IoT) may refer to a network of physical objects, devices, or "things". IoT devices may be embedded with, for example, electronics, software, or sensors and may have network connectivity, which enable these devices to collect and exchange data. IoT devices may be sensed and controlled remotely across existing network infrastructure, creating opportunities for more direct integration between the physical world and computer-based systems and resulting in improved efficiency, accuracy, and economic benefit. Systems that include IoT devices augmented with sensors and actuators may be referred to as cyber-physical systems. Cyber-physical systems may include technologies such as smart grids, smart homes, intelligent transportation, and/or smart cities. Each "thing" (e.g., IoT device) may be uniquely identifiable through its embedded computing system may be able to interoperate within existing infrastructure, such as Internet infrastructure.

Narrowband IoT (NB-IoT) may refer to a narrowband radio technology specially designed for the IoT. NB-IoT may focus on indoor coverage, low cost, long battery life, and large number of devices. To reduce the complexity of UEs, NB-IoT may allow for narrowband deployments utilizing one physical resource block (PRB) (e.g., 180 kHz + 20 kHz guard band). NB-IoT deployments may utilize higher layer components of certain systems (e.g., LTE) and hardware to allow for reduced fragmentation and cross compatibility with, for example, NB-LTE and/or enhanced/evolved machine type communications (eMTC).

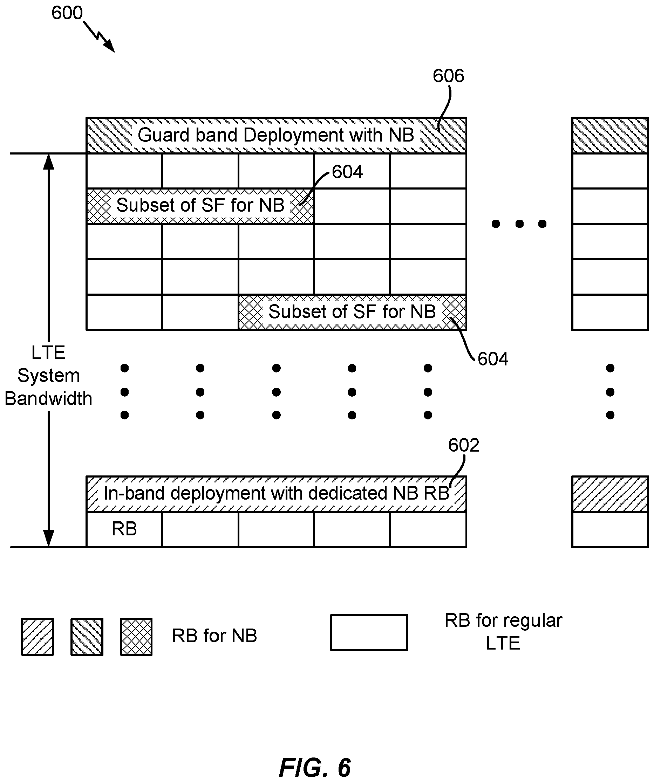

FIG. 6 illustrates an example deployment 600 of NB-IoT, according to certain aspects of the present disclosure. Three NB-IoT deployment configurations include in-band, guard-band, and standalone. For the in-band deployment configuration, NB-IoT may coexist with a legacy system (e.g., GSM, WCDMA, and/or LTE system(s)) deployed in the same frequency band. For example, the wideband LTE channel may be deployed in various bandwidths between 1.4 MHz to 20 MHz. As shown in FIG. 6, a dedicated resource block (RB) 602 within that bandwidth may be available for use by NB-IoT and/or the RBs 1204 may be dynamically allocated for NB-IoT. As shown in FIG. 6, in an in-band deployment, one RB, or 200 kHz, of a wideband channel (e.g., LTE) may be used for NB-IoT.

Certain systems (e.g., LTE) may include unused portions of the radio spectrum between carriers to guard against interference between adjacent carriers. In some deployments, NB-IoT may be deployed in a guard band 606 of the wideband channel.

In other deployments, NB-IoT may be deployed standalone (not shown). In a standalone deployment, one 200 MHz carrier may be utilized to carry NB-IoT traffic and GSM spectrum may be reused.

Deployments of NB-IoT may include synchronization signals such as PSS for frequency and timing synchronization and SSS to convey system information. For NB-IoT operations, PSS/SSS timing boundaries may be extended as compared to the existing PSS/SSS frame boundaries in legacy systems (e.g., LTE), for example, from 10 ms to 40 ms. Based on the timing boundary, a UE is able to receive a PBCH transmission, which may be transmitted in subframe 0 of a radio frame.

### Example NR/5G RAN Architecture

New radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). NR may utilize OFDM with a CP on the uplink and downlink and include support for half-duplex operation using TDD. NR may include Enhanced Mobile Broadband (eMBB) service targeting wide bandwidth (e.g. 80 MHz beyond), millimeter wave (mmW) targeting high carrier frequency (e.g. 60 GHz), massive MTC (mMTC) targeting non-backward compatible MTC techniques, and/or mission critical targeting ultra reliable low latency communications (URLLC) service.

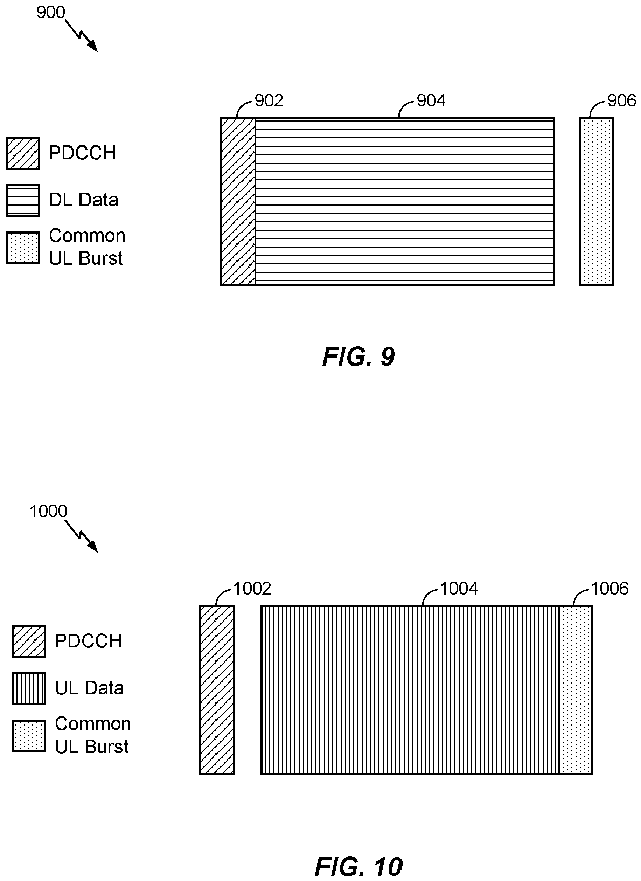

A single component carrier bandwidth of 100 MHZ may be supported. NR resource blocks may span 12 sub-carriers with a sub-carrier bandwidth of 75 kHz over a 0.1 ms duration. Each radio frame may consist of 50 subframes with a length of 10 ms. Consequently, each subframe may have a length of 0.2 ms. Each subframe may indicate a link direction (i.e., DL or UL) for data transmission and the link direction for each subframe may be dynamically switched. Each subframe may include DL/UL data as well as DL/UL control data. UL and DL subframes for NR may be as described in more detail below with respect to FIGs. 9 and 10.

Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells. Alternatively, NR may support a different air interface, other than an OFDM-based interface. NR networks may include entities such central units or distributed units

The RAN may include a central unit (CU) and distributed units (DUs). A NR BS (e.g., gNB, 5G Node B, Node B, transmission reception point (TRP), access point (AP)) may correspond to one or multiple BSs. NR cells can be configured as access cells (ACells) or data only cells (DCells). For example, the RAN (e.g., a central unit or distributed unit) can configure the cells. DCells may be cells used for carrier aggregation or dual connectivity, but not used for initial access, cell selection/reselection, or handover. In some cases DCells may not transmit synchronization signals-in some case cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

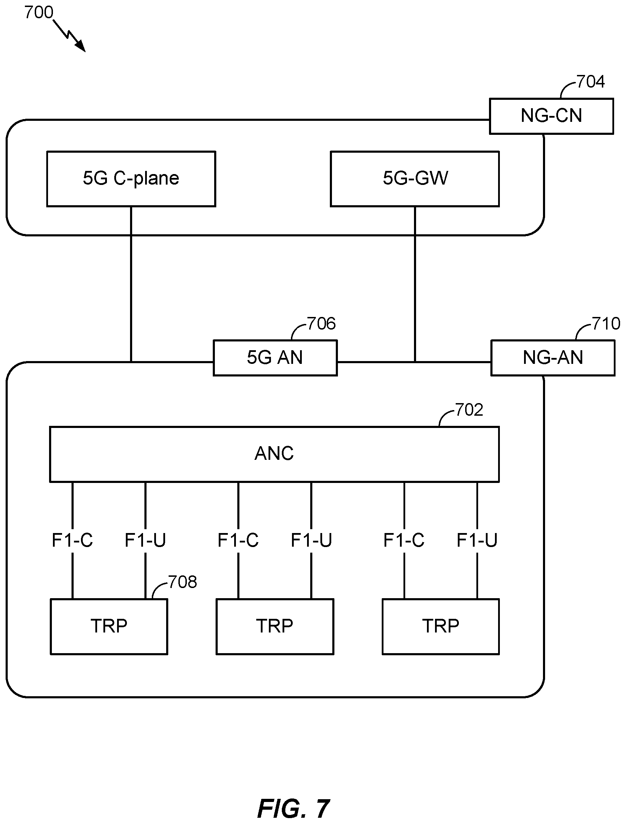

FIG. 7 illustrates an example logical architecture of a distributed RAN 700, according to aspects of the present disclosure. A 5G access node 706 may include an access node controller (ANC) 702. The ANC may be a central unit (CU) of the distributed RAN 700. The backhaul interface to the next generation core network (NG-CN) 704 may terminate at the ANC. The backhaul interface to neighboring next generation access nodes (NG-ANs) may terminate at the ANC. The ANC may include one or more TRPs 708 (which may also be referred to as BSs, NR BSs, Node Bs, 5G NBs, APs, or some other term). As described above, a TRP may be used interchangeably with "cell."

The TRPs 708 may be a distributed unit (DU). The TRPs may be connected to one ANC (ANC 702) or more than one ANC (not illustrated). For example, for RAN sharing, radio as a service (RaaS), and service specific AND deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture 700 may be used to illustrate fronthaul definition. The architecture may be defined that support fronthauling solutions across different deployment types. For example, the architecture may be based on transmit network capabilities (e.g., bandwidth, latency, and/or jitter).

The architecture may share features and/or components with LTE. According to aspects, the next generation AN (NG-AN) 710 may support dual connectivity with NR. The NG-AN may share a common fronthaul for LTE and NR

The architecture may enable cooperation between and among TRPs 708. For example, cooperation may be preset within a TRP and/or across TRPs via the ANC 702. According to aspects, no inter-TRP interface may be needed/present.

According to aspects, a dynamic configuration of split logical functions may be present within the architecture 700. The PDCP, RLC, MAC protocol may be adaptably placed at the ANC or TRP.

According to certain aspects, a BS may include a central unit (CU) (e.g., ANC 702) and/or one or more distributed units (e.g., one or more TRPs 708).

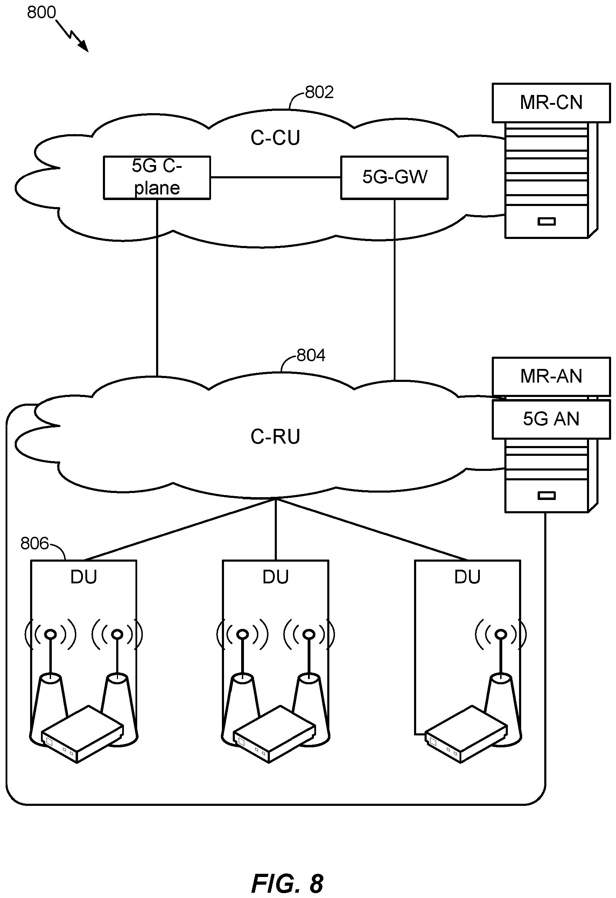

FIG. 8 illustrates an example physical architecture of a distributed RAN 800, according to aspects of the present disclosure. A centralized core network unit (C-CU) 802 may host core network functions. The C-CU may be centrally deployed. C-CU functionality may be offloaded (e.g., to advanced wireless services (AWS)), in an effort to handle peak capacity.

A centralized RAN unit (C-RU) 804 may host one or more ANC functions. Optionally, the C-RU may host core network functions locally. The C-RU may have distributed deployment. The C-RU may be closer to the network edge.

A distributed unit (DU) 706 may host one or more TRPs. The DU may be located at edges of the network with radio frequency (RF) functionality.

FIG. 9 is a diagram 900 showing an example of a DL-centric subframe. The DL-centric subframe may include a control portion 902. The control portion 902 may exist in the initial or beginning portion of the DL-centric subframe. The control portion 902 may include various scheduling information and/or control information corresponding to various portions of the DL-centric subframe. In some configurations, the control portion 902 may be a physical DL control channel (PDCCH), as indicated in FIG. 9. The DL-centric subframe may also include a DL data portion 904. The DL data portion 904 may sometimes be referred to as the payload of the DL-centric subframe. The DL data portion 904 may include the communication resources utilized to communicate DL data from the scheduling entity (e.g., UE or BS) to the subordinate entity (e.g., UE). In some configurations, the DL data portion 904 may be a physical DL shared channel (PDSCH).

The DL-centric subframe may also include a common UL portion 906. The common UL portion 906 may sometimes be referred to as an UL burst, a common UL burst, and/or various other suitable terms. The common UL portion 906 may include feedback information corresponding to various other portions of the DL-centric subframe. For example, the common UL portion 906 may include feedback information corresponding to the control portion 902. Non-limiting examples of feedback information may include an ACK signal, a NACK signal, a HARQ indicator, and/or various other suitable types of information. The common UL portion 906 may include additional or alternative information, such as information pertaining to random access channel (RACH) procedures, scheduling requests (SRs), and various other suitable types of information. As illustrated in FIG. 9, the end of the DL data portion 904 may be separated in time from the beginning of the common UL portion 906. This time separation may sometimes be referred to as a gap, a guard period, a guard interval, and/or various other suitable terms. This separation provides time for the switch-over from DL communication (e.g., reception operation by the subordinate entity (e.g., UE)) to UL communication (e.g., transmission by the subordinate entity (e.g., UE)). One of ordinary skill in the art will understand that the foregoing is merely one example of a DL-centric subframe and alternative structures having similar features may exist without necessarily deviating from the aspects described herein.

FIG. 10 is a diagram 1000 showing an example of an UL-centric subframe. The UL-centric subframe may include a control portion 1002. The control portion 1002 may exist in the initial or beginning portion of the UL-centric subframe. The control portion 1002 in FIG. 10 may be similar to the control portion 1002 described above with reference to FIG. 9. The UL-centric subframe may also include an UL data portion 1004. The UL data portion 1004 may sometimes be referred to as the payload of the UL-centric subframe. The UL portion may refer to the communication resources utilized to communicate UL data from the subordinate entity (e.g., UE) to the scheduling entity (e.g., UE or BS). In some configurations, the control portion 1002 may be PDCCH. In some configurations, the data portion may be a physical uplink shared channel (PUSCH).

As illustrated in FIG. 10, the end of the control portion 1002 may be separated in time from the beginning of the UL data portion 1004. This time separation may sometimes be referred to as a gap, guard period, guard interval, and/or various other suitable terms. This separation provides time for the switch-over from DL communication (e.g., reception operation by the scheduling entity) to UL communication (e.g., transmission by the scheduling entity). The UL-centric subframe may also include a common UL portion 1006. The common UL portion 1006 in FIG. 10 may be similar to the common UL portion 1006 described above with reference to FIG. 10. The common UL portion 1006 may additional or alternative include information pertaining to channel quality indicator (CQI), sounding reference signals (SRSs), and various other suitable types of information. One of ordinary skill in the art will understand that the foregoing is merely one example of an UL-centric subframe and alternative structures having similar features may exist without necessarily deviating from the aspects described herein.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

A UE may operate in various radio resource configurations, including a configuration associated with transmitting pilots using a dedicated set of resources (e.g., a radio resource control (RRC) dedicated state, etc.) or a configuration associated with transmitting pilots using a common set of resources (e.g., an RRC common state, etc.). When operating in the RRC dedicated state, the UE may select a dedicated set of resources for transmitting a pilot signal to a network. When operating in the RRC common state, the UE may select a common set of resources for transmitting a pilot signal to the network. In either case, a pilot signal transmitted by the UE may be received by one or more network access devices, such as an access node (AN), or a distributed unit (DU), or portions thereof. Each receiving network access device may be configured to receive and measure pilot signals transmitted on the common set of resources, and also receive and measure pilot signals transmitted on dedicated sets of resources allocated to the UEs for which the network access device is a member of a monitoring set of network access devices for the UE. One or more of the receiving network access devices, or a central unit (CU) to which receiving network access device(s) transmit the measurements of the pilot signals, may use the measurements to identify serving cells for the UEs, or to initiate a change of serving cell for one or more of the UEs.

### EXAMPLE ASSISTED CELL ACQUISTION FOR LOW COST WIRELESS

### DEVICES

In certain systems, such as enhanced machine type communication (eMTC) systems, cell search and acquisition can be costly. For example, there may be a large number of frequency carrier hypotheses (e.g., long term evolution (LTE) may use a 100 kHz raster). In addition, there may be a low signal-to-noise ratio (SNR) which may lead to a long search period for the device to detect the cell. Some low cost devices, such as eMTC devices, may also have reduced processing gain. For example, some low cost devices may use (be configured with) a single receive antenna and/or receive chain (i.e., 1 RX devices). These conditions can lead to increased cell acquisition time for low cost devices, which in turn can drain the battery faster.

Accordingly, techniques for an enhanced cell acquisition for low cost devices are desirable.

Techniques and apparatus are provided herein for assisted cell acquisition for low cost wireless devices. In aspects, assistance information can be provided to the low cost devices to be used for cell search and acquisition. The low cost device can use the assistance information when it performs the cell search and acquisition which may help to reduce the time for the search and acquisition, which, in turn may help to conserve power and extend the battery life for the low cost device.

FIG. 11 is a flow diagram illustrating example operations 1100 for assisted cell acquisition, in accordance with certain aspects of the present disclosure. The operations 1100 is performed by a wireless node, such as a UE (e.g., UE 120), which may be a low cost wireless device (e.g., an eMTC UE or a wearable). The operations 1100 begins, at 1102, by receiving (e.g., by broadcast or unicast signaling over a WLAN or Bluetooth connection) assistance information (e.g., information regarding neighboring cells) from another wireless node (e.g., a smartphone or eMTC device) for use in performing a cell search (e.g., cell-search assistance information). At 1104, the wireless node performs a cell search using the assistance information. According to certain aspects, the wireless node may request the cell-search assistance information.

FIG. 12 is a flow diagram illustrating example operations 1200 for provided assisted cell acquisition information, in accordance with certain aspects of the present disclosure. The operations 1200 may be performed, for example, by another wireless node (e.g., another UE 102) which may be a smartphone, another low cost UE, or eMTC UE. The operations 1200 may be complementary operations by the wireless node that sends the assistance information to the operations 1100 performed by the wireless node that receives the assistance information and perform cell acquisition. The operations 1200 may begin, at 1202, by obtaining (e.g., receiving, generating, or determining) assistance information for use in performing a cell search (e.g., cell-search assistance information). At 1204, the wireless node transmits the assistance information to another wireless node (e.g., the low cost UE, eMTC device, or wearable).

Assistance information can be used to decrease the cell search and acquisition time for low cost devices. According to certain aspects, cell-search assistance information can be obtained (e.g., received or generated) by another device. The device may be a smartphone, for example, that has a higher processing power and more antennas for obtaining/generating the cell assistance information, or can be another eMTC device (e.g., a wireless marathon milestone device could transmit the assistance information to a marathon runner wearing a wireless activity tracker device). The other device can then send the assistance information to the low cost device to reduce the cell search and acquisition procedure for the low cost device.

In one example implementation, a smartphone can find cells and then transmit some information regarding the cells to a wearable, which the wearable can use for cell acquisition. The cell may use a first radio access technology (RAT) and the smartphone may transmit the assistance information to the wearable using a different RAT. For example, the smartphone may transmit the assistance information to the wearable over a wireless local area network (WLAN) such as Wi-Fi, or over a Bluetooth connection.

According to certain aspects, the cell-search assistance information may include information related to an identification of neighboring cell(s). For example, the information may include a physical cell ID (PCID) of the neighboring cell(s).

According to certain aspects, the cell-search assistance information may include information related to an operating frequency of neighboring cell(s). For example, the information may include a frequency offset of the neighboring cell(s) relative to the smartphone or device sending the assistance information or a frequency offset relative to a center frequency. In this case, the wearable or device receiving the assistance information can calculate the frequency offset between the wearable and smartphone to approximate the offset (e.g., carrier frequency offset (CFO)) between the wearable and the neighboring cell(s). As another example, the assistance information can include a center frequency (e.g., raster) of the neighboring cell(s).

According to certain aspects, the cell-search assistance information may include synchronization information associated with the neighboring cell(s). For example, the assistance information may include physical broadcast channel (PBCH) content associated with the neighboring cell(s) (e.g., content from a PBCH received by the smartphone or device transmitting the assistance information). In this case the wearable can reconstruct the in-phase and quadrature (IQ) PBCH samples to obtain timing by correlating the received PBCH. The wearable can use the timing information to estimate the delay caused by the other RAT (e.g., in which the cell operates) and correct for the delay.

According to certain aspects, the cell-search assistance information may include information regarding capabilities of the neighboring cell(s). For example, the assistance information may include information regarding whether the neighboring cell(s) support PBCH repetition (e.g., bundling); a number of transmit antennas; information regarding supported eMTC/coverage enhancement (CE) levels by the neighboring cell(s); information regarding RATs supported by the neighboring cell(s) (e.g., UMTS, LTE, etc.); and/or information regarding a public land mobile network (PLMN) associated with the neighboring cell(s).

According to certain aspects, the cell-search assistance information may include information regarding access to the neighboring cell(s). For example, the assistance information may include cell barring information (e.g., whether the cell has a closed subscription group) associated with the neighboring cell(s). In aspects, other types of assistance information may be sent.

According to certain aspects, the message from the smartphone (or other wireless device) to the wearable (or other low cost device) with the assistance information may also include a list of cells (e.g., a neighbor cell list) with the corresponding assistance information for the cells in the list.

After receiving the assistance information, the wearable (low cost device) may perform the cell search and acquisition based on the assistance information provided.

According to certain aspects, the smartphone (or other wireless device) may be configured to send the assistance information to the wearable (low cost device), for example, periodically. Alternatively, the wearable may send a request to the smartphone for the assistance information and the smartphone may send the assistance information in response to the request. In this case, the wearable and smartphone may not be paired devices. For example, the smartphone may belong to one user and the wearable may belong to a different user. The request may specify a desired PLMN, a supported CE level, and/or support for a particular RAT.

According to certain aspects, the assistance information is broadcast to the wearable. In this case, the assistance information may be used by a group of wearables receiving the broadcast information.

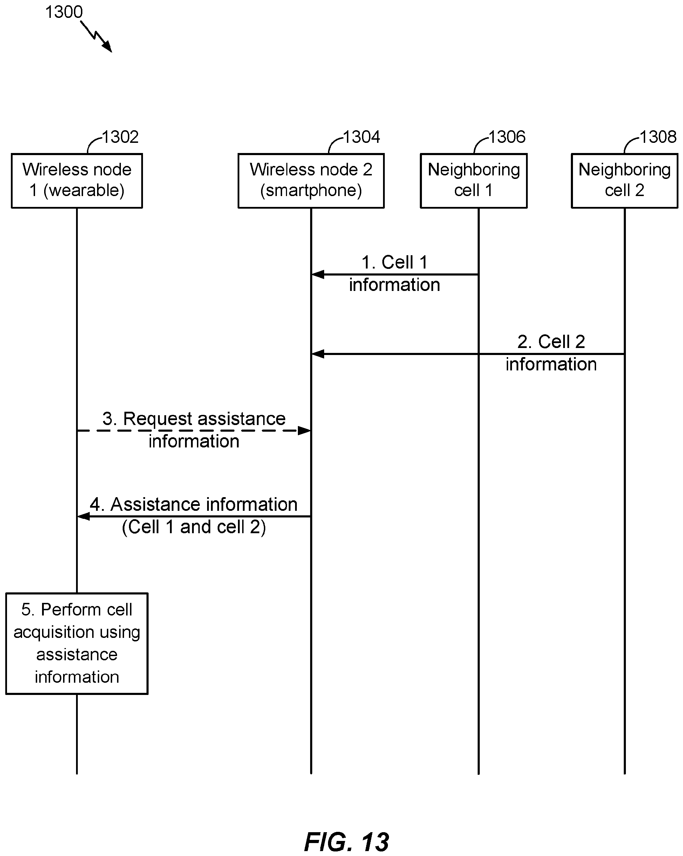

FIG. 13 is a call flow diagram 1300 illustrating example signaling between wireless nodes for assisted cell acquisition, in accordance with certain aspects of the present disclosure. As shown in FIG. 13, the wireless node 1304 (which may be smartphone) receives information regarding neighboring cells 1306 and 1308, at 1 and 2. Optionally, at 3, the wireless node 1302 (which may be a low cost device such as a wearable) can transmit a request to the wireless node 1304 for assistance information. At 4, the wireless node 1304 can send assistance information including the information regarding neighboring cells 1306 and 1308 to the wireless node 1302. At 5, the wireless node 1302 can perform cell acquisition using the assistance information (e.g., to acquire the neighboring cells 1306 and/or 1304).

The techniques described above for assisted cell search and acquisition may result in decreased cell search and acquisition times which, in turn, may lead to reduced power consumption and longer battery life for low cost devices.

As used herein, a phrase referring to "at least one of' a list of items refers to any combination of those items, including single members. As an example, "at least one of: a, b, or c" is intended to cover: a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "identifying" encompasses a wide variety of actions. For example, "identifying" may include calculating, computing, processing, deriving, investigating, looking up (e.g., looking up in a table, a database or another data structure), ascertaining and the like. Also, "identifying" may include receiving (e.g., receiving information), accessing (e.g., accessing data in a memory) and the like. Also, "identifying" may include resolving, selecting, choosing, establishing and the like.

In some cases, rather than actually communicating a frame, a device may have an interface to communicate a frame for transmission or reception. For example, a processor may output a frame, via a bus interface, to an RF front end for transmission. Similarly, rather than actually receiving a frame, a device may have an interface to obtain a frame received from another device. For example, a processor may obtain (or receive) a frame, via a bus interface, from an RF front end for transmission.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The various operations of methods described above may be performed by any suitable means capable of performing the corresponding functions. The means may include various hardware and/or software/firmware component(s) and/or module(s), including, but not limited to a circuit, an application specific integrated circuit (ASIC), or processor. Generally, where there are operations illustrated in Figures, those operations may be performed by any suitable corresponding counterpart means-plus-function components.

For example, means for determining, means for performing, means for transmitting, means for receiving, means for sending, means for signaling, and/or means for obtaining may include one or more processors, transmitters, receivers, and/or other elements of the user equipment 120 and/or the base station 110 illustrated in FIG. 2.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or combinations thereof.

Those of skill would further appreciate that the various illustrative logical blocks, modules, circuits, and algorithm steps described in connection with the disclosure herein may be implemented as electronic hardware, software/firmware, or combinations thereof. To clearly illustrate this interchangeability of hardware and software/firmware, various illustrative components, blocks, modules, circuits, and steps have been described above generally in terms of their functionality. Whether such functionality is implemented as hardware or software/firmware depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software/firmware module executed by a processor, or in a combination thereof. A software/firmware module may reside in RAM memory, flash memory, ROM memory, EPROM memory, EEPROM memory, phase change memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software/firmware, or combinations thereof. If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein but is to be accorded the widest scope consistent with the principles and novel features disclosed herein as long as they fall within the terms of the appended claims.

## Claims

1. A method (1100) of wireless communications, comprising:
receiving (1102), by a wireless node, over a wireless local area network, WLAN, or bluetooth connection assistance information from a user equipment, UE, regarding a plurality of neighbouring cells for use in performing a cell search, wherein the assistance information is received via broadcast transmission from the UE to a group of wireless nodes; and
performing (1104), by the wireless node, the cell search using the assistance information.

2. The method of claim 1, wherein the wireless node comprises an enhanced machine type communications, eMTC, device, or wherein the UE comprises a smartphone or an enhanced machine type communications, eMTC, device or a Narrowband Internet of Things, NB - IoT, device, or wherein the assistance information comprises information related to an identification of a cell, the information including a physical cell identification, PCID, of a cell, or wherein the assistance information comprises information related to at least one of: an operating frequency of a cell or a capability of the cell, or wherein the assistance information comprises information regarding access to a cell, the information including cell barring information for the cell.

3. The method of claim 1, wherein:
the assistance information comprises synchronization information regarding a cell, the information including at least one of: physical broadcast channel, PBCH, information received by the other wireless node from the cell or timing information associated with the cell; and
performing the cell search using the assistance information comprises:
reconstructing in-phase and quadrature, IQ, samples for the received PBCH using the PBCH information, and
correlating a received signal with the reconstructed IQ samples.

4. The method of claim 1, wherein the assistance information comprises a list of cells and assistance information associated with each of the cells.

5. A method of wireless communications by a user equipment, UE, comprising:
obtaining (1202) assistance information regarding a plurality of neighbouring cells for use in performing a cell search; and
broadcasting (1204) over a wireless local area network, WLAN, or a Bluetooth connection the assistance information to a group of wireless nodes.

6. The method of claim 5, wherein the UE comprises an enhanced machine type communications, eMTC, device or a smartphone, or wherein the assistance information comprises information related to an identification of a cell, the information including a physical cell identification, PCID, of a cell, or wherein the assistance information comprises information related to at least one of an operating frequency of a cell or a capability of the cell, or wherein the assistance information comprises synchronization information regarding a cell, the information including at least one of: physical broadcast channel, PBCH, information received by the wireless node from the cell or timing information associated with the cell.

7. The method of claim 5, wherein the assistance information comprises information regarding access to a cell, the information including cell barring information for the cell.

8. The method of claim 5, wherein the assistance information comprises a list of cells and assistance information associated with each of the cells.

9. A wireless node, comprising:
means arranged to perform the steps of any one of claims 1 to 4.

10. A user equipment comprising means arranged to perform the steps of any one of claims 5 to 8.

## Patentansprüche

1. Ein Verfahren (1100) für Drahtloskommunikationen, das Folgendes aufweist:
Empfangen (1102), durch einen Drahtlosknoten, über ein Drahtloslokalnetzwerk bzw. WLAN (WLAN = wireless local area network) oder eine Bluetooth-Verbindung von Assistenzinformation von einer Nutzereinrichtung bzw. UE (UE = user equipment) bezüglich einer Vielzahl von benachbarten Zellen zur Nutzung beim Durchführen einer Zellsuche, wobei die Assistenzinformation über eine Broadcast-Sendung von der UE an eine Gruppe von Drahtlosknoten empfangen wird; und
Durchführen (1104), durch den Drahtlosknoten, der Zellsuche unter Nutzung der Assistenzinformation.

2. Verfahren nach Anspruch 1, wobei der Drahtlosknoten eine eMTC-Einrichtung (eMTC = enhanced machine type communications) aufweist, oder wobei die UE ein Smartphone oder eine eMTC-Einrichtung oder eine NBloT-Einrichtung (NB = Narrowband bzw. Schmalband, loT = Internet of Things bzw. Internet der Dinge) ist, oder wobei die Assistenzinformation Information in Bezug auf eine Identifikation einer Zelle aufweist, wobei die Information eine PCID (PCID = physical cell identification bzw. Identifikation einer physischen Zelle) einer Zelle beinhaltet, oder wobei die Assistenzinformation Information bezüglich wenigstens einem von Folgendem aufweist: einer Betriebsfrequenz einer Zelle oder einer Fähigkeit der Zelle, oder wobei die Assistenzinformation Information bezüglich Zugriff auf eine Zelle aufweist, wobei die Information Zellensperrinformation für die Zelle aufweist.

3. Verfahren nach Anspruch 1, wobei:
die Assistenzinformation Synchronisationsinformation bezüglich einer Zelle aufweist, wobei die Information wenigstens eines von Folgendem beinhaltet: PBCH-Information (PBCH = physical broadcast channel bzw. physischer Broadcast-Kanal), die durch den anderen Drahtlosknoten von der Zelle empfangen wird oder Timing-Information, die mit der Zelle assoziiert ist; und Durchführen der Zellsuche unter Nutzung der Assistenzinformation Folgendes aufweist:
Rekonstruieren von In-Phase- und Quadratur-Abtastungen bzw. IQ-Samples für den empfangenen PBCH unter Nutzung der PBCH-Information, und Korrelieren eines empfangenen Signals mit den rekonstruierten IQ-Samples.

4. Verfahren nach Anspruch 1, wobei die Assistenzinformation eine Liste von Zellen aufweist und Assistenzinformation, die mit jeder der Zellen assoziiert ist.

5. Ein Verfahren für Drahtloskommunikationen durch eine Nutzereinrichtung bzw. UE (UE = user equipment), das Folgendes aufweist:
Erlangen (1202) von Assistenzinformation bezüglich einer Vielzahl von benachbarten Zellen zur Nutzung beim Durchführen einer Zellsuche; und
Broadcasten (1204) über ein Drahtloslokalnetzwerk bzw. WLAN (WLAN = wireless local area network) oder eine Bluetooth-Verbindung, der Assistenzinformation an eine Gruppe von Drahtlosknoten.

6. Verfahren nach Anspruch 5, wobei die UE eine eMTC-Einrichtung (eMTC = enhanced machine type communications) oder ein Smartphone aufweist, oder wobei die Assistenzinformation Information bezüglich einer Identifikation einer Zelle aufweist, wobei die Information eine Identifikation einer physischen Zelle bzw. PCID (PCID = physical cell identification) einer Zelle beinhaltet, oder wobei die Assistenzinformation Information bezüglich wenigstens einem von einer Betriebsfrequenz einer Zelle oder eine Fähigkeit der Zelle aufweist, oder wobei die Assistenzinformation Synchronisationsinformation bezüglich einer Zelle aufweist, wobei die Information wenigstens eines von Folgendem beinhaltet: Information eines physischen Broadcastkanals bzw. PBCH-Information (PBCH = physical broadcast channel), die durch den Drahtlosknoten von der Zelle empfangen wird, oder Timing-Information, die mit der Zelle assoziiert ist.

7. Verfahren nach Anspruch 5, wobei die Assistenzinformation Information bezüglich Zugriffs auf eine Zelle aufweist, wobei die Information Zellensperrinformation für die Zelle beinhaltet.

8. Verfahren nach Anspruch 5, wobei Assistenzinformation eine Liste von Zellen aufweist und Assistenzinformation, die mit jeder der Zellen assoziiert ist.

9. Ein Drahtlosknoten, der Folgendes aufweist:
Mittel, die ausgelegt sind zum Durchführen der Schritte nach einem der Ansprüche 1 bis 4.

10. Eine Nutzereinrichtung, die Mittel aufweist, die ausgelegt sind zum Durchführen der Schritte nach einem der Ansprüche 5 bis 8.

## Revendications

1. Procédé (1100) de communications sans fil, comprenant :
une réception (1102), par un noeud sans fil, sur un réseau local sans fil, WLAN, ou une connexion Bluetooth d'informations d'assistance à partir d'un équipement d'utilisateur, UE, concernant une pluralité de cellules voisines pour une utilisation lors d'une réalisation d'une recherche de cellule, dans lequel les informations d'assistance sont reçues par l'intermédiaire d'une transmission de diffusion à partir de l'UE vers un groupe de noeuds sans fil ; et
une réalisation (1104), par le noeud sans fil, de la recherche de cellule en utilisant les informations d'assistance.

2. Procédé selon la revendication 1, dans lequel le noeud sans fil comprend un dispositif de communications de type machine améliorées, eMTC, ou dans lequel l'UE comprend un smartphone ou un dispositif de communications de type machine améliorées, eMTC, ou un dispositif d'Internet des objets à bande étroite, NB-IoT, ou dans lequel les informations d'assistance comprennent des informations liées à une identification d'une cellule, les informations incluant une identification de cellule physique, PCID, d'une cellule, ou dans lequel les informations d'assistance comprennent des informations liées à au moins un élément parmi : une fréquence de fonctionnement d'une cellule ou une capacité de la cellule, ou dans lequel les informations d'assistance comprennent des informations concernant un accès à une cellule, les informations incluant des informations d'interdiction de cellule pour la cellule.

3. Procédé selon la revendication 1, dans lequel :
les informations d'assistance comprennent des informations de synchronisation concernant une cellule, les informations incluant au moins un élément parmi : des informations de canal de diffusion physique, PBCH, reçues par l'autre noeud sans fil à partir de la cellule ou des informations de temporisation associées à la cellule ; et
la réalisation de la recherche de cellule en utilisant les informations d'assistance comprend :
une reconstruction d'échantillons en phase et en quadrature, IQ, pour le PBCH reçu en utilisant les informations de PBCH, et
une corrélation d'un signal reçu avec les échantillons IQ reconstruits.

4. Procédé selon la revendication 1, dans lequel les informations d'assistance comprennent une liste de cellules et d'informations d'assistance associées à chacune des cellules.

5. Procédé de communications sans fil par un équipement d'utilisateur, UE, comprenant :
une obtention (1202) d'informations d'assistance concernant une pluralité de cellules voisines pour une utilisation lors d'une réalisation d'une recherche de cellule ; et
une diffusion (1204) sur un réseau local sans fil, WLAN, ou une connexion Bluetooth des informations d'assistance à un groupe de noeuds sans fil.

6. Procédé selon la revendication 5, dans lequel l'UE comprend un dispositif de communications de type machine améliorées, eMTC, ou un smartphone, ou dans lequel les informations d'assistance comprennent des informations liées à une identification d'une cellule, les informations incluant une identification de cellule physique, PCID, d'une cellule, ou dans lequel les informations d'assistance comprennent des informations liées à au moins un élément parmi une fréquence de fonctionnement d'une cellule ou une capacité de la cellule, ou dans lequel les informations d'assistance comprennent des informations de synchronisation concernant une cellule, les informations incluant au moins un élément parmi : des informations de canal de diffusion physique, PBCH, reçues par le noeud sans fil à partir de la cellule ou des informations de temporisation associées à la cellule.

7. Procédé selon la revendication 5, dans lequel les informations d'assistance comprennent des informations concernant un accès à une cellule, les informations incluant des informations d'interdiction de cellule pour la cellule.

8. Procédé selon la revendication 5, dans lequel les informations d'assistance comprennent une liste de cellules et des informations d'assistance associées à chacune des cellules.

9. Noeud sans fil, comprenant :
un moyen agencé pour réaliser les étapes selon l'une quelconque des revendications 1 à 4.

10. Équipement d'utilisateur comprenant des moyens agencés pour réaliser les étapes selon l'une quelconque des revendications 5 à 8.
